Europäisches Patentamt

European Patent Office

Office européen des brevets

(19)

(11) Publication number: **0 084 232 B1**

# (12) EUROPEAN PATENT SPECIFICATION

(45) Date of publication of patent specification: **04.02.87**

(51) Int. Cl.⁴: **G 01 F 1/32, H 03 H 19/00**

(21) Application number: **82306580.0**

(22) Date of filing: **09.12.82**

(54) **Filter circuits for reducing vibration sensitivity in vortex shedding flowmeter signal generators.**

(30) Priority: **10.12.81 US 329539**

(43) Date of publication of application:
**27.07.83 Bulletin 83/30**

(45) Publication of the grant of the patent:
**04.02.87 Bulletin 87/06**

(84) Designated Contracting States:
**DE FR GB IT**

(56) References cited:
**DE-A-3 006 766
US-A-4 123 940
US-A-4 134 297
US-A-4 306 203
US-A-4 336 513**

(73) Proprietor: **THE BABCOCK & WILCOX
COMPANY
1010 Common Street P.O. Box 60035
New Orleans Louisiana 70160 (US)**

(72) Inventor: **Thompson, William L.
15364 GAR Highway
Chardon Ohio (US)**
Inventor: **Willey, Michael S.
8653 Apple Hill Road
Chagrin Falls Ohio (US)**

(74) Representative: **Cotter, Ivan John et al
D. YOUNG & CO. 10 Staple Inn
London WC1V 7RD (GB)**

Courier Press, Leamington Spa, England.

## Description

This invention relates to vortex shedding flowmeter signal generators including filter circuits for reducing the sensitivity of the generator to undesired signals.

The operation of vortex shedding flowmeters is known and exemplified by US Patent No. US—A—4 026 150 (Schmidt). It is known that when a non-streamlined obstacle or bluff body is placed in a flow stream vortices are produced which alternate from one side to the opposite side of the obstruction. The vortices are produced at a frequency which is directly proportional to the volumetric flow rate.

It is also known to direct a vortex shedding frequency through a preamplifier to processing circuitry, and through a two wire transmission line to a remote station for determining the flow rate. Such circuitry is exemplified in US Patents Nos. US—A—4 134 297 (Herzl), US—A—4 094 194 (Herzl) and US—A—4 123 940 (Herzl et al).

It is known that vortex shedding sensors or transmitters are particularly sensitive to vibrations. Such vibrations are sometimes misinterpreted as the vortex shedding frequency or at least represent noise and obstruction to receiving the true vortex shedding frequency.

US—A—4 123 940 and US—A—4 134 297 (both mentioned above) both disclose a vortex shedding flowmeter signal generator including means for reducing the sensitivity of the generator to undesired signals such as noise.

US—A—4 123 940 discloses a vortex shedding flowmeter signal generator including means for providing a vortex shedding frequency signal, a filter circuit for reducing the sensitivity of the generator to undesired signals, and a phase locked loop. In US—A—4 123 940, the vortex shedding frequency signal is frequency modulated (FM) and the FM signal is transmitted to a signal conditioner over a two-wire transmission arrangement. At the signal conditioner, the FM signal is applied to the filter circuit, which is in the form of a tuned or resonant network, whereby noise which is present over a broad spectrum is attenuated at all frequencies other than those lying within the deviation band of the FM signal. Also, after the signal has been demodulated and converted into the form of a square wave, it is processed by the phase locked loop, which comprises a phase detector, a voltage controlled oscillator (VCO) and a programmable counter to provide protection against signal fading. In the phase locked loop, the counter divides the output frequency of the VCO by a number set into programmable switches.

US—A—4 134 297 also employs frequency modulation. Noise content at frequencies outside of the operating range of the oscillator employed is attenuated. Also, picked-up noise in the form of amplitude modulated components are attenuated by a clipping action preceding an FM detector.

Neither US—A—4 123 940 nor US—A—4 134 297 mentions the specific problem of suppressing undesired signals in the form of vibration signals.

According to the present invention there is provided a vortex shedding flowmeter signal generator including means for providing a vortex shedding frequency signal, a filter circuit for reducing the sensitivity of the generator to undesired signals, and a phase locked loop, characterised in that the filter circuit is operative to reduce the sensitivity of the generator to vibration and comprises:

means for providing a vibration signal representative of said vibration, the phase locked loop being connected for receiving the vibration signal and multiplying a parameter of the vibration signal by a selected number;

dividing means connected to an output of the phase locked loop for dividing the parameter of the vibration signal by the selected number;

multiplexer means connected to an output of the dividing means for sequentially preserving the average voltage of each of a plurality of sequential time increments of the period of the vibration signal as divided by the selected number in the dividing means, the vibration signal period being divided into a number of such increments equal to the selected number; and

means for subtracting each average voltage from the vortex shedding frequency signal during each respective time increment.

Preferred embodiments of the invention are defined in claims 2 to 6.

A preferred embodiment of the present invention described hereinbelow processes a vibration signal and subtracts it from the vortex shedding frequency signal to provide a shedding frequency signal with reduced or eliminated noise. The preferred circuit includes a separate vibration sensor with preamplifier for sensing vibration in the flow stream. A vibration signal is provided through a phase locked loop and counter to a channel multiplexer circuit which selectively and sequentially applies a voltage from different sequential parts of the vibration signal to a plurality of capacitors. The vortex sensor signal is provided through the multiplexer circuitry wherein the vibration signal at each instant is subtracted from the vortex shedding frequency signal to provide a substantially noise reduced output signal for further amplification. The preferred circuit is simple in design and economical to manufacture.

The invention will now be further described, by way of illustrative and non-limiting example, with reference to the accompanying drawing, in which:

Figure 1 is a block schematic diagram of a vortex shedding flowmeter signal generator embodying the invention; and

Figure 2 is a waveform diagram showing the application of voltages to various capacitors of the circuit of Figure 1.

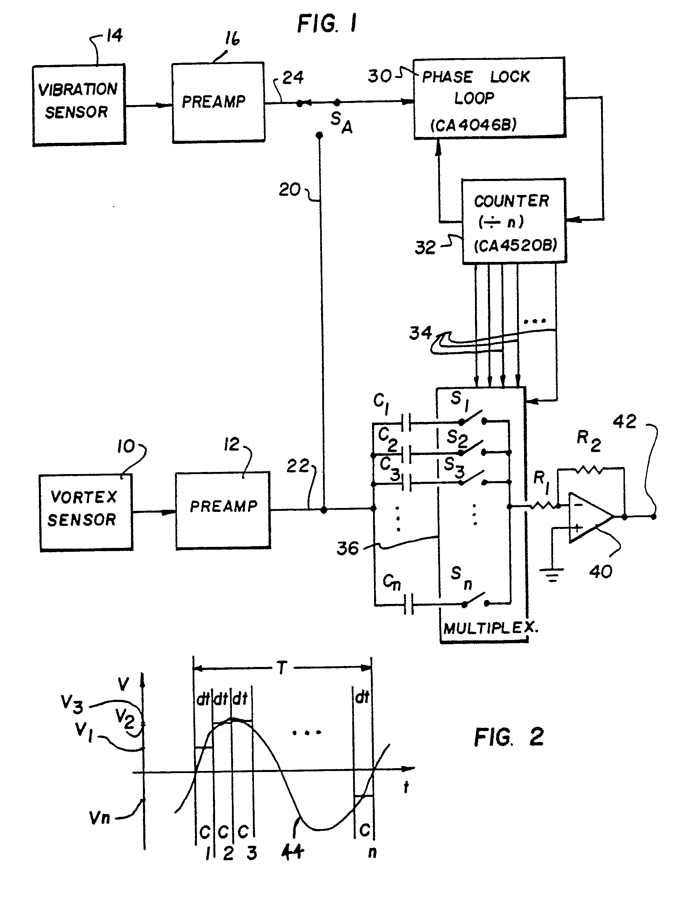

Figure 1 of the drawings shows a vortex sensor 10, a preamplifier 12 for amplifying a vortex shedding frequency signal from the vortex sensor, a vibration sensor 14, and a preamplifier 16 for amplifying a vibration signal from the vibration sensor. The elements 10, 12, 14 and 16 are known *per se* in the art.

A connecting line 20 is connected across output lines 22 and 24 respectively of the vortex sensor preamplifier 12 and the vibration sensor preamplifier 16. A selector switch $S_A$ is manually or automatically operable to select one of the output lines 20 or 24 and connect it to a phase locked loop 30. The output line 24 from the vibration sensor preamplifier 16 is shown connected to the loop 30. The phase locked loop 30, for example a CA4046B, is connected to the output line 24 of the vibration sensor which maintains a signal in known fashion if the signal disappears. The phase locked loop 30 thus locks into the vibration signal and generates a control signal for tracking a notch filter that is in synchronism with the undesired vibration signal component.

The vibration signal is multiplied by a number n equal to the number of switches $S_1$ to $S_n$ in a multiplexer 36. This multiplication takes place in the phase locked loop 30 using known circuit components.

An output of the phase locked loop 30 is connected to a divide-by-n counter 32 which is, for example, a CA4520B. The counter 32 divides the signal by the value n and provides it over digital output lines 34 to the multiplexer 36. The multiplexer 36 operates to sequentially close the switches $S_1$ to $S_n$ during a single period of the vibration singal. If there is no single vibration frequency, the period is that of the fundamental frequency component of the vibration signal.

Each of a plurality of capacitors $C_1$ to $C_n$, connected in series with the respective switches $S_1$ to $S_n$ is thus supplied with an average voltage value from the signal during each time increment during which its corresponding switch is closed. Since the capacitors $C_1$ to $C_n$ are in series with the vortex sensor signal coming from the line 22, through suitable and known electronic circuitry, the capacitor voltage is subtracted from the vortex shedding frequency signal.

This leaves only the desired vortex shedding frequency signal at an output resistor $R_1$, which signal is amplified by an operational amplifier 40 (having a feedback resistor $R_2$) in known fashion to produce a vortex shedding frequency output signal at a terminal 42.

The multiplexer 36 comprising the switches $S_1$ to $S_n$ is exemplified by a CD4067B integrated circuit multiplexer.

Figure 2 shows one period of the fundamental vibration signal 44 whose voltage varies over a total period T. The total period is divided by n into time increments dt. The average voltage $V_1$ to $V_n$ for each time increment is applied to its corresponding capacitor $C_1$ to $C_n$ by sequential operation of the respective switches $S_1$ to $S_n$.

The vibration in the flow is sometimes sufficiently great to produce a vibration signal in the vortex sensor 10 itself and, when this is the case, the switch $S_A$ can be switched over to connect to line 20 and provide the vibration signal to the phase locked loop circuit 30.

The amplifier 40 at the output of the notch filter converts the vortex signal currents in the capacitors $C_1$ to $C_n$ into a voltage signal to drive following circuitry (not shown). The time constant of the resistor $R_1$ and the capacitors taken individually determines the average of the signal and the bandwidth of the notch. The values of these components typically are chosen so that the quantity $1/2\pi R_1 C$ is less than one tenth of the frequency (or fundamental frequency) of the vibration signal to be removed. Also, this determines the lower limit of the desired vortex signal to be amplified. That is, the lower cutoff will be determined by the quantity $1/2\pi R_1 C$ where C is the value of the individual capacitors $C_1$ to $C_n$.

An important feature of this apparatus is the tracking of the notch filter to the vibration signal and the sequential elimination of a major portion of the undesired vibration effects in the output of the vortex shedding flow sensor or transmitter.

## Claims

1. A vortex shedding flowmeter signal generator including means (10) for providing a vortex shedding frequency signal, a filter circuit for reducing the sensitivity of the generator to undesired signals, and a phase locked loop (30), characterised in that the filter circuit is operative to reduce the sensitivity of the generator to vibration and comprises:

means (14; 10) for providing a vibration signal representative of said vibration, the phase locked loop (30) being connected for receiving the vibration signal and multiplying a parameter of the vibration signal by a selected number;

dividing means (32) connected to an output of the phase locked loop for dividing the parameter of the vibration signal by the selected number;

multiplexer means (36) connected to an output of the dividing means (32) for sequentially preserving the average voltage of each of a plurality of sequential time increments of the period of the vibration signal as divided by the selected number in the dividing means (32), the vibration signal period being divided into a number of such increments equal to the selected number; and

means for subtracting each average voltage from the vortex shedding frequency signal during each respective time increment.

2. A generator according to claim 1, wherein the dividing means (32) comprises a counter having a digital output, and the multiplexer means (36) and subtracting means comprise a plurality of parallel connected switches ($S_1$ to $S_n$) equal in number to said selected number and a respective capacitor ($C_1$ to $C_n$) connected in series with each switch to preserve the average voltage, and to subtract the preserved average voltage from the vortex shedding frequency signal during each respective time increment.

3. A generator according to claim 2, including an operational amplifier (40) connected to amplify the substracted vortex shedding frequency signal from the subtracting means.

4. A generator according to claim 3, including a resistor $(R_1)$ connected between the operational amplifier (40) and the parallel connected switches $(S_1$ to $S_n)$, the quantity $1/2\pi RC$, where R comprises the value of the resistance connected between the operational amplifier and the switches and C comprises the value of the individual capacitors connected in series with the switches, being chosen so that it is less than one tenth of the frequency of the vibration signal.

5. A generator according to any one of claims 1 to 4, wherein the means for providing a vibration signal comprises a vibration sensor (14) operative to provide a vibration signal representative of vibration in the flow stream.

6. A generator according to any one of claims 1 to 4, wherein the means for producing a vibration signal representative of vibration in the flow stream is provided by the means (10) for providing the vortex shedding frequency signal.

**Patentansprüche**

1. Signalgeber in Wirbelablöseströmungsmessern mit Mitteln (10) zur Schaffung eines Wirbelablöse-Frequenzsignals, einer Filterschaltung zur Verringerung der Empfindlichkeit des Signalgebers auf unerwünschte Signale und mit einem PLL-Kreis (30), dadurch gekennzeichnet, daß die Filterschaltung so betreibbar ist, daß sie die Empfindlichkeit des Signalgebers auf Vibration verringert und aufweist:

Mittel (14; 10) zur Schaffung eines Vibrationssignals, welches für die Vibration charakteristisch ist, wobei der PLL-Kreis (30) für die Aufnahme des Vibrationssignals und Vervielfachung eines Parameters des Vibrationssignals um eine aus gewählte Anzahl angeschlossen ist;

Teilermittel (32), die an einem Ausgang des PLL-Kreises angeschlossen sind zum Teilen des Parameters des Vibrationssignals durch die gewünschte Anzahl;

Multiplexermittel (36), die mit einem Ausgang des Teilermittels (32) verbunden sind, um nacheinander die Durchschnittsspannung jedes einer Vielzahl von Folgezeitinkrementen der Zeitdauer des Vibrationssignals aufrechtzuerhalten, wie es von der ausgewählten Anzahl in den Teilermitteln (32) geteilt ist, wobei die Vibrationssignalzeitdauer in eine Anzahl solcher Inkremente geteilt ist, die gleich der ausgewählten Anzahl ist; und

Mittel zum Substrahieren jeder Durchschnittsspannung vom Wirbelablöse-Frequenzsignal während jedes entsprechenden Zeitinkrementes.

2. Signalgeber nach Anspruch 1, wobei das Teilermittel (32) einen Zähler aufweist mit einem digitalen Ausgang und das Multiplexermittel (36) sowie das Subtrahiermittel eine Vielzahl von parallel verbundenen Schaltern $(S_1$ bis $S_n)$ aufweist, deren Zahl gleich der ausgewählten Anzahl ist, sowie einen entsprechenden Kondensator $(C_1$ bis $C_n)$ aufweisen, welcher in Reihe mit jedem Schalter verbunden ist, um die Durchschnittsspannung aufrechtzuerhalten, und zum Subtrahieren der aufrechterhaltenen Durchschnittsspannung vom Wirbelablöse-Frequenzsignal während jedes betreffenden Zeitinkrementes.

3. Signalgeber nach Anspruch 2, mit einem Betriebsverstärker (40), der zum Verstärken des subtrahierten Wirbelablöse-Frequenzsignals aus dem Subtrahiermittel verbunden ist.

4. Signalgeber nach Anspruch 3, mit einem Widerstand $(R_1)$, der zwischen dem Betriebsverstärker (40) und den parallel verbundenen Schaltern $(S_1$ bis $S_n)$ verbunden ist, wobei die Größe $1/2\pi RC$ mit R als Wert des Widerstandes, der zwischen dem Betriebsverstärker und den Schaltern angeschlossen ist, und mit C als Wert der einzelnen Kondensatoren, die in Reihe mit den Schaltern geschaltet sind, derart ausgewählt ist, daß sie kleiner als ein Zehntel der Frequenz des Vibrationssignals ist.

5. Signalgeber nach einem der Ansprüche 1 bis 4, wobei das Mittel zur Schaffung eines Vibrationssignals einen Vibrationssensor (14) aufweist, der so betreibbar ist, daß er ein Vibrationssignal vorsieht, welches für die Vibration im Strömungsfluß charakteristisch ist.

6. Signalgeber nach einem der Ansprüche 1 bis 4, wobei das Mittel zur Schaffung eines Vibrationssignals, welches die Vibration im Strömungsfluß darstellt, durch das Mittel (10) zur Schaffung des Wirbelablöse-Frequenzsignals vorgesehen ist.

**Revendications**

1. Générateur de signaux de débitmètre à indication de vortex, comprenant des moyens (10) pour produire un signal de fréquence d'induction de vortex, un circuit de filtrage pour réduire la sensibilité du générateur aux signaux indésirables, et une boucle (30) à verrouillage de phase, caractérisé en ce que le circuit de filtrage fonctionne de façon à réduire la sensibilité du générateur à la vibration et comprend:

des moyens (14, 10) pour produire un signal de vibration représentant ladite vibration, la boucle (30) à verrouillage de phase étant connectée de façon à recevoir le signal de vibration et à multiplier un paramètre de ce signal de vibration par un nombre sélectionné;

des moyens de division (32) connectés à une sortie de la boucle à verrouillage de phase pour diviser le paramètre du signal de vibration par le nombre sélectionné;

des moyens de multiplexage (36) connectés à une sortie des moyens de division (32) pour préserver séquentiellement la tension moyenne de chacun d'une pluralité d'incréments de temps séquentiels de la période du signal de vibration divisée par le nombre sélectionné dans les moyens de division (32), la période du signal de vibration étant divisée en un nombre desdits incréments égal au nombre sélectionné; et

des moyens pour soustraire chaque tension moyenne du signal de fréquence d'induction de vortex pendant chaque incrément de temps respectif.

2. Générateur selon la revendication 1, dans lequel les moyens de division (32) comprennent un compteur ayant une sortie numérique, et les moyens de multiplexage (36) et les moyens de soustraction comprennent une pluralité de commutateurs ($S_1$ à $S_n$) connectés en parallèle, dont le nombre est égal audit nombre sélectionné, et un condensateur respectif ($C_1$ à $C_n$) connecté en série avec chaque commutateur pour préserver la tension moyenne, et pour soustraire la tension moyenne préservée du signal de fréquence d'induction de vortex dans chaque incrément de temps respectif.

3. Générateur selon la revendication 2, comprenant un amplificateur opérationnel (40) connecté de façon à amplifier le signal de fréquence d'induction de vortex soustrait, produit par les moyens de soustraction.

4. Générateur selon la revendication 3, comprenant une résistance ($R_1$) connectée entre l'amplificateur opérationnel (40) et les commutateurs ($S_1$ à $S_n$) connectés en parallèle, la quantité $1/2\pi RC$, dans laquelle R représente la valeur de la résistance connectée entre l'amplificateur opérationnel et les commutateurs et C représente la valeur des condensateurs individuels connectés en série avec les commutateurs, étant choisie de telle façon qu'elle soit inférieure à un dixième de la fréquence du signal de vibration.

5. Générateur selon l'une quelconque des revendications 1 à 4, dans lequel les moyens pour produire un signal de vibration comprennent un détecteur de vibration (14) agissant de façon à produire un signal de vibration représentant la vibration dans l'écoulement du flux.

6. Générateur selon l'une quelconque des revendications 1 à 4, dans lequel les moyens pour produire un signal de vibration représentant la vibration dans l'écoulement du flux sont fournis par les moyens (10) pour produire le signal de fréquence d'induction de vortex.

## FIG. 1

```
┌─────────┐      ┌─────────┐   24              30  ┌─────────────────┐
│VIBRATION│      │         │  ──•─•──•────────────▶│  PHASE   LOCK   │
│ SENSOR  │─────▶│ PREAMP  │         S_A           │     LOOP        │
│         │      │         │                       │   (CA4046B)     │
└─────────┘      └─────────┘                       └─────────────────┘
    14              16                                      │
                                                   ┌─────────────────┐
                                              20   │    COUNTER      │
                                                   │     (÷ n)       │
                                              32    │   (CA4520B)     │
                                                   └─────────────────┘
                                                     │ │ │ │   ...
                                              34
                                                     │ │ │ │
                                          C_1    ┌──S_1──┐         R_2    42
                                          C_2    │  S_2  │          R_1
┌─────────┐      ┌─────────┐   22         C_3    │  S_3  │         ┌──┐
│ VORTEX  │      │         │              ┊      │   ┊   │       ──│- ╲
│ SENSOR  │─────▶│ PREAMP  │──────────────┤      │       │         │   ╲──┐ 42
│         │      │         │              ┊      │   ┊   │       ──│+ ╱
└─────────┘      └─────────┘   36         C_n    │  S_n  │         └──╱
    10              12                            └───────┘          ═
                                                 MULTIPLEX.          40
```

## FIG. 2

```
          V
     V_3 ╲ V_2      ◄───────── T ──────────►
     V_1  ╲│       dt│dt│dt              │ dt │
          ╲│     ┌──┬──┬──┐              │    │
           │    ╱       ╲                │   ╱│
     ───────────────────────────────────────────▶ t
           │  ╱          ╲      ...     ╲ │ ╱
     V_n ──┘ │   │   │     ╲_____╲│╱  │
             C   C   C          44        C
             1   2   3                     n
```